# EUROPEAN PATENT APPLICATION

(11) **EP 1 964 796 A1**
(43) Date of publication of application: **03.09.2008**
(21) Application number: 08003347.5
(22) Date of filing: 25.02.2008
(51) Int. Cl.: B65G 47/252, B65G 47/82

(54) **Device for orientating elongated objects**

(30) Priority: 01.03.2007 NL 1033476
(71) Applicant: Sormac B.V., 5916 PN Venlo (NL)
(72) Inventor: Thijssen, Jozef Johan Antoon, 5916 PK Venlo (NL)
(74) Representative: Bleukx, Lucas Lodewijk M.

(57) **Abstract**

Device for reversing the orientation of elongated objects such as carrots or such products in a conveying system, wherein the elongated objects are conveyed in parallel to the direction of conveying, said conveying system comprising a first conveying device (1) for conveying elongated objects in accordance with a first straight line, and a second conveying device (2) for moving the elongated objects in accordance with a second straight line, said second straight line mainly being in parallel to the first straight line, whereby at the transition between the two conveyor devices a turn-over mechanism (20) is arranged that by means of a turning movement about 180° can move the elongated object from the first to the second conveyor device.

## Description

The invention relates to a device for reversing the orientation of elongated objects such as carrots or suchlike in a conveying system, wherein the elongated objects are conveyed in parallel to the direction of conveying, said conveying system comprising a first conveying device for conveying elongated objects in accordance with a first straight line, and a second conveying device for moving the elongated objects in accordance with a second straight line, said second straight line mainly being in parallel to the first straight line.

When handling elongated objects, for example carrots, which have ends of different shapes, it is important that all the objects are orientated in the same direction, particularly when they reach the processing station. In the case of carrots, for example, it is important that all the carrots on the conveying system are orientated with the tail end of the carrots pointing forwards. This ensures correct processing of the carrots in the subsequent processing stations where, for example, the two ends are cut off and the carrot is further cut into pieces of suitable length.

In automated machines the elongated objects such as carrots can easily be placed separately one after the other on a conveying system with the longitudinal axis in the same direction.

However, in doing so the orientation of the elongated object is not defined which can lead to the aforementioned problems in the subsequent processing stations.

The aim of the invention is to create a device of the above type in which all the objects are orientated in the same direction before they are processed.

This objective is achieved in accordance with the invention in that at the transition between the two conveying device a turn-over mechanism is arranged which with a turning movement about 180° can move the elongated object from the first conveying device to the second conveying device.

By activating the turn-over mechanism at the right moment, the orientation of the elongated objects that are not orientated as required can be reversed.

To do this the turn-over mechanism can be controlled manually by a person operating the machine or by means of automatic detection and control devices.

Other features and advantages will be explained in the following descriptions whereby reference is made to the attached drawings, wherein:
Fig. 1 is a schematic top view of a conveying system in accordance with the invention
Fig. 2 is a side view of the conveying system in accordance with figure 1
Fig. 3 is a view in the direction of the arrow III of the conveying system in accordance with figure 2 with a first form of embodiment of the turn-over mechanism, and
Fig. 4 is a view in the direction of the arrow III of the conveying system in accordance with figure 2 with a second form of embodiment of the turn-over mechanism.

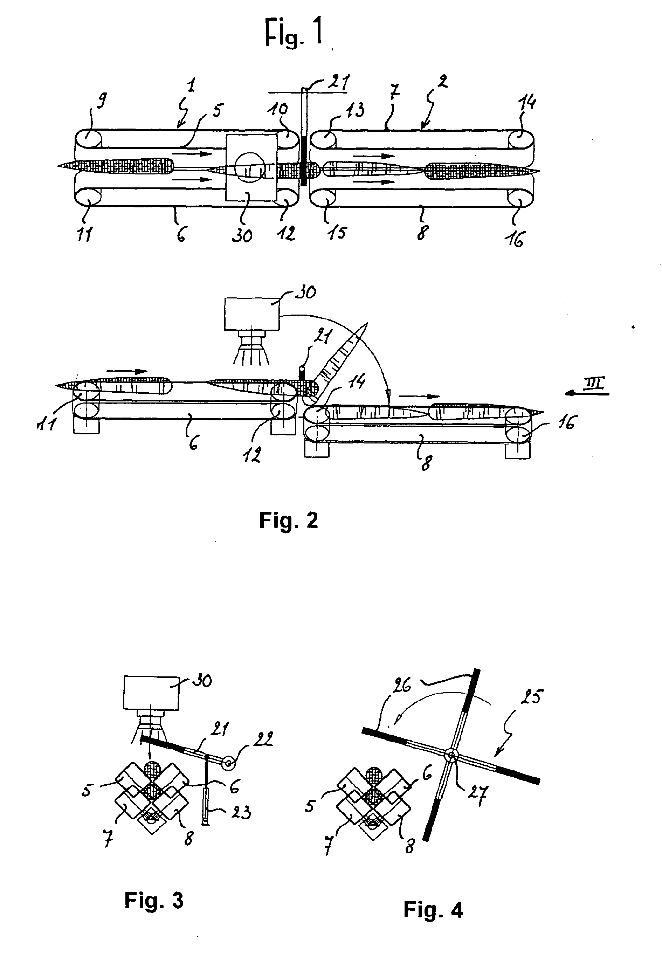

Figs. 1 and 2 show a conveying system in accordance with the invention with a first conveying device 1 and second conveying device 2 for conveying elongated objects, which are carrots in the illustrated form of embodiment. In the description below the term carrot will continue to be used but it should be made clear that other type of elongated objects can also be used in the device in accordance with the invention.

The conveying devices 1 and 2 are essentially identical and each comprise a pair of conveyor belts 5, 6 and 7, 8 respectively, which are attached around rollers 9, 10, 11, 12, 13, 14, 15 and 16.

The belts 5 and 6 together form a V-shaped channel for conveying the carrots and in the same way belts 7 and 8 also form a V-shaped channel. The longitudinal directions of the belts 5, 6, 7 and 8 are parallel to each other and in the illustrated form of embodiment the belts 5 and 7 and 6 and 8 are parallel to each other whereby the belts 7 and 8 are at a slightly lower level than belts 5 and 6.

On the belts 5, 6 are carrots with their longitudinal direction parallel to the longitudinal direction of the belts 5, 6 but with an arbitrary orientation. How the carrots have ended up on these belts in this position is not essential for the invention but it is possible to realise this by way of an automatically operating system with the aid of which the carrots are placed one by one on the belts 5, 6, for example by means of a holder in which the carrots are located in which a mainly vertically operating conveying system with compartments is arranged whereby in each compartment one or more carrots are carried and then placed one after the other on the belts 5, 6.

In an automatic system of this type the orientation of the carrots on the belts 5, 6 is undetermined. That is to say that either the tail end of the carrot or the top of the carrot forms the leading section. This is undesirable for the following processes that have to be carried out on the carrot, such as removing the top, cutting etc.

In order to avoid this a turning mechanism 20 is arranged between the conveying devices 1 and 2 with the aid of which when being moved from conveying device 1 to conveying device 3 a carrot is turned about an angle of 180° if this is necessary to orientate the carrot as desired.

In the illustrated form of embodiment a system has been selected in which each carrot has to be conveyed to the processing station with the tail end of the carrot at the front. For this purpose there is an orientation system 23 with the aid of which the orientation of the carrots can be determined. In principle this can be constituted by a number of sensors that determine the width of the first detected carrot end and on the basis of this emit a signal that is representative of the nature of the end (top or tail end). A more reliable method utilises a photographic camera that compares one section of the leading end with one or more reference images and draws a conclusion on the basis of this.

If the carrot is orientated with its tail end at the front then the carrot is taken up without problems by the conveying device 2 and transported on to the processing station.

If the carrot is moving head first then at the moment this end reaches the transition to the conveying device the turn-over mechanism 20 is activated.
This mechanism 20 comprises an arm 21 that is mounted in a rotating manner about a turning point 22 and can be moved to and fro by means of a pneumatic or hydraulic cylinder 23, for example. The downward movement starts at the moment that a head end reaches the transition whereby the end of the carrot is pressed down into the space between the two conveying device and turned completely about 180° whereby the belts 5, 6, 7 and 8 act as support ends. The carrot then continues on its way on the second conveying device with its tail end facing forwards.

In a modified form of embodiment a turn-over mechanism 25 is used comprising four arms that together form a cross, whereby the cross-over point is located on an axle 27. The axle 27 can be rotated about an angle of 90° each time. This can take place, for example, by means of a step motor. To turn an incorrectly orientated carrot the cross formed by the arms 26 only has to be activated at the right moment.

It is clear that the invention is not restricted to the forms of embodiment that have been described and illustrated here, but that within the scope of the claims numerous modifications can be made that form part of the invention.

More particularly, in this way the conveying devices 1 or 2 can be designed differently, for example as one single conveyor belt or as connected pair of rollers. Furthermore, it is not necessary for the conveyor belts to be a prolongation of each other, but an angle can be formed between them.
In addition, the number of arms in this turn-over mechanism 25 is not limited to four, but any number can be used on condition that sufficient space remains for the turning movement of the carrots.

## Claims

1. Device for reversing the orientation of elongated objects such as carrots or suchlike in a conveying system, wherein the elongated objects are conveyed in parallel to the direction of conveying, said conveying system comprising a first conveying device for conveying elongated objects in accordance with a first straight line, and a second conveying device for moving the elongated objects in accordance with a second straight line, said second straight line mainly being in parallel to the first straight line, **characterised in that** at the transition between the two conveying devices a turn-over mechanism is arranged which by way of a turning movement about 180° can move the elongated object from the first to the second conveying device.

2. Device in accordance with claim 1, **characterised in that** arranged close to the first conveying device there is a device for detecting the orientation of the elongated objects.

3. Device in accordance with claim 1 or 2, **characterised in that** the end of the second conveying device orientated towards the first conveying device is at a lower level than the end of the first conveying device facing the second conveying device.

4. Device in accordance with any one of the preceding claims **characterised in that** the turn-over mechanism is formed by an arm that can be moved between the two conveying devices.

5. Device in accordance with any one of the preceding claims **characterised in that** arranged close to the end of the first conveying device there is a detector for detecting the presence of an elongated object.

6. Device in accordance with any one of the preceding claims **characterised in that** means are present that on detecting an incorrectly orientated elongated object and the presence of an elongated object near to the end of the first conveying device can move the arm of the turn-over mechanism in a downward direction.

7. Device in accordance with any one of preceding claims 5 or 6 **characterised in that** the arm of the turn-over mechanism is hinged and can be moved to and fro by means of an operating element..

8. Device in accordance with any one of preceding claims 5 or 6 **characterised in that** the turn-over mechanism has a number of arms that are mounted in a star-like manner around a turning point and the arms can be turned about a determined angle each time by rotation about the turning point.

9. Device in accordance with any one of the preceding claims **characterised in that** at least one of the conveying device is formed by a belt conveyor

10. Device in accordance with claim 9 **characterised in** the belt conveyor is formed by two conveyor belts arranged in parallel and next to each other, the surfaces of which form a V-shaped channel.
